# EUROPEAN PATENT SPECIFICATION

(11) **EP 3 490 949 B1**
(45) Date of publication and mention of the grant of the patent: **15.10.2025**
(21) Application number: 17754533.2
(22) Date of filing: 01.08.2017
(51) Int. Cl.: C03C 3/066, C03C 3/091, C03C 8/02, C03C 8/04, C03C 8/18, C03C 8/24, C03C 11/00, C03C 14/00, C03C 27/00, C03C 27/02, H01B 1/16, H01T 13/34, H01T 13/50, H01T 21/02

(54) **CORONA IGNITION DEVICE WITH IMPROVED SEAL**
KORONAZÜNDUNGSVORRICHTUNG MIT VERBESSERTER DICHTUNG
DISPOSITIF D'ALLUMAGE À EFFET COURONNE À JOINT D'ÉTANCHÉITÉ AMÉLIORÉ

(30) Priority: 01.08.2016 US 201615225341
(43) Date of publication of application: 05.06.2019
(73) Proprietor: Federal-Mogul Ignition LLC, Northville, MI 48168 (US)
(72) Inventor: FIRSTENBERG, Keith, Livonia MI 48154 (US); WALKER, William, J., Jr., Ann Arbor MI 48104 (US); DURHAM, Patrick, J., Troy MI 48084 (US); LYKOWSKI, James, D., Temperance MI 48182 (US)
(74) Representative: Buzzi, Notaro & Antonielli d'Oulx S.p.A.
(86) International application number: PCT/US2017/044904
(87) International publication number: WO 2018/026817

(56) References cited:
- US-A- 4 342 553
- US-A1- 2016 039 712
- US-A1- 2016 043 531
- US-B1- 6 492 289
- PARTRIDGE G: "LEAD-THROUGH SEALS INCORPORATING A FOAMED GLASS CERAMIC", GLASS TECHNOLOGY, SOCIETY OF GLASS TECHNOLOGY, SHEFFIELD, GB, vol. 24, no. 6, 1 December 1983 (1983-12-01), pages 293 - 297, XP001202023, ISSN: 0017-1050

## Description

### CROSS REFERENCE TO RELATED APPLICATIONS

This Application claims the benefit of U.S. Patent Application No. 15/225,341, filed August 1, 2016.

### BACKGROUND OF THE INVENTION

### 1. Field of the Invention

This invention relates generally to glass seals for ignition devices, and more particular to corona igniters including glass seals, and methods of forming the same. Document US-A-2016039712 discloses example of prior glass seals for corona igniters.

### 2. Related Art

Glass seals are oftentimes used to form a hermetic bond between an electrically conductive component, such as central electrode, and an insulator of an ignition device, for example a corona igniter. The glass seal of the corona igniter is typically formed by disposing a glass powder in a bore of the insulator, and then subsequently firing the insulator, central electrode, and glass powder together in a furnace. The heat also causes certain components of the glass seal to expand and thus form the hermetic bond between the insulator and central electrode. However, as the glass powder between the central electrode and insulator melts and expands, gas bubbles or gas pores are formed, and those bubbles or pores remain in the glass seal of the finished corona igniter, even after the glass seal cools to room temperature. Thus, when the corona igniter is used in an internal combustion engine and subjected to a high electric field, the electric field causes the gas contained in the bubbles or pores to become ionized and form corona. The ionized gas generates a cascade of ionized charges which transmits heat to the surrounding solid insulator. A thermal breakdown mechanism occurs, which can create a dielectric breakdown. The effect of this dielectric breakdown caused by the gas is especially pronounced when the bubbles or pores are large, in which case dielectric failure of the insulator can occur. Dielectric punctures through the insulator to the expanded glass seal could potentially result in failure of the corona igniter.

### SUMMARY or THE INVENTION

One aspect of the invention provides an electrically conductive glass seal for providing a hermetic bond between an electrically conductive component and an insulator of a corona igniter. The glass seal includes at least one glass in a total amount of 72.0 to 82.0 weight percent (wt. %), and electrically conductive metal particles in an amount of 10.0 to 25.0 wt. %, based on the total weight of the glass seal. The glass seal also includes gas-filled pores in an amount of 25.0 to 75.0 volume percent (vol. %), based on the total volume of the glass seal. The glass has the composition defined in claim 1.

Another aspect of the invention provides a corona igniter including an insulator surrounding an electrically conductive component, and an electrically conductive glass seal providing a hermetic bond between the electrically conductive component and the insulator. The electrically conductive glass seal includes at least one glass in a total amount of 72.0 to 82.0 wt. %, and electrically conductive metal particles in an amount of 10.0 to 25.0 wt. %, based on the total weight of the glass seal. The glass seal also includes gas-filled pores in an amount of 25.0 to 75.0 vol. %, based on the total volume of the glass seal. The glass has the composition defined in claim 6.

Yet another aspect of the invention provides a method of manufacturing a glass seal for a corona igniter. The method includes providing a mixture including at least one glass frit in a total amount of 72.0 to 90.0 wt. %, an inorganic binder in an amount of 1.0 to 5.0 wt. %, an expansion agent in an amount of 0.1 to 0.5 wt. %, and electrically conductive metal particles in an amount of 10.0 to 25.0 wt. %, based on the total weight of the mixture. The glass frit has the composition defined in claim 7. The method further includes firing the mixture to form the glass seal.

Another aspect of the invention provides a method of manufacturing a corona igniter including an electrically conductive glass seal providing a hermetic bond between an electrically conductive component and an insulator. The method includes disposing a mixture between the electrically conductive component and the insulator, wherein the mixture comprises at least one glass frit in a total amount of 72.0 to 90.0 wt.%, an inorganic binder in an amount of 1.0 to 5.0 wt. %, an expansion agent in an amount of 0.1 to 0.5 wt. %, and electrically conductive metal particles in an amount of 10.0 to 25.0 wt. %, based on the total weight of the mixture. The glass frit has the composition defined in claim 9.

The electrically conductive particles surround any gas filled pores which are formed during firing of the glass seal. The electrically conductive particles eliminate the electric field across the pores when the corona igniter is used in an internal combustion engine and subjected to a high electric field. Thus, ionization of the gas which could initiate dielectric breakdown and dielectric puncture through the insulator of the corona igniter is eliminated.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a cross-sectional view of a corona igniter including an electrically conductive glass seal according to an exemplary embodiment of the invention;
Figure 2 is an illustration of the electrically conductive glass seal of Figure 1 along line A-A after a firing step, which includes glass, conductive metal particles, and gas-filled pores; and
Figure 2A is an enlarged view of a portion of Figure 2.

### DESCRIPTION OF THE ENABLING EMBODIMENT

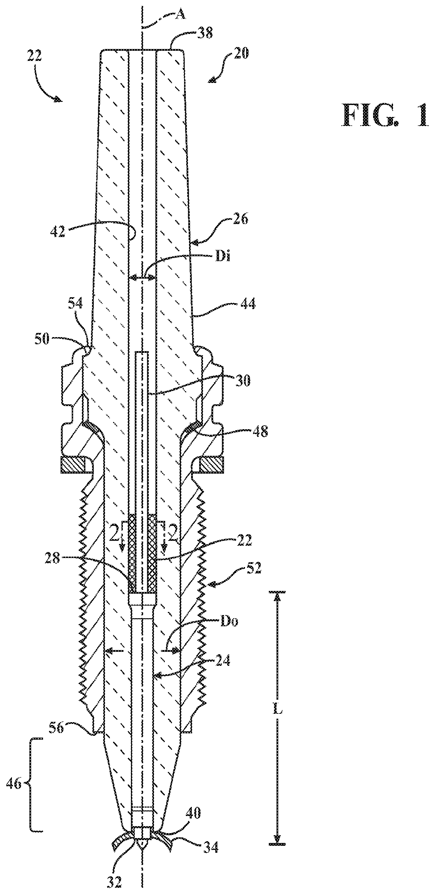

One aspect of the invention provides a corona igniter **20** including an electrically conductive glass seal **22** providing a hermetic bond between at least one electrically conductive component, such as a central electrode **24**, and an insulator **26**, as shown in Figure 1. The composition of the glass seal **22** reduces the potential for dielectric breakdown and thus dielectric punctures through the insulator **26** when the central electrode **24** or other electrically conductive components of the corona igniter **20** receives a high radio frequency electric field during use in an internal combustion engine.

The electrically conductive glass seal **22** is formed from a powder mixture which includes a mixture of electrically conductive particles, at least one binder, an expansion agent, and glass frits. The glass seal **22** includes the electrically conductive particles in an amount of 10.0 to 25.0 weight percent (wt. %), and preferably 20.0 wt. %, based on the total weight of the glass seal **22**. The powder used to form the glass seal **22** includes the electrically conductive particles in an amount of 10.0 to 25.0 wt. %, based on the total weight of the powder used to form the glass seal **22**.

The electrically conductive particles can include a single material or a mixture of different materials. Any conductive metal can be used to form the electrically conductive particles, but in the exemplary embodiment, the electrically conductive particles consist of, or essentially of, copper. Also, the electrically conductive particles can comprise various forms, but in the exemplary embodiment, they are provided in the form of copper flakes having a particle size of less than 325 mesh, or 45 microns. The electrically conductive particles cause the glass seal **22** to be electrically conductive.

As described above, in comparative corona igniters including nonconductive glass seals, the gas bubbles or pores become ionized and form corona during service, which can lead to dielectric failure of the insulator. However, when the electrically conductive glass seal **22** of the present invention is used in the corona igniter **20**, the electrically conductive particles surround the gas bubbles or pores and thus eliminate the electric field across the bubbles or pores when the high radio frequency voltage is applied to the corona igniter **20**. Since no corona discharge is formed along the bubbles or pores of the electrically conductive glass seal **22**, the initiation mechanism for ionization breakdown and dielectric puncture through the insulator **26** is eliminated.

The powder used to form the electrically conductive glass seal **22** also includes the at least one inorganic binder in an amount of 1.0 to 5.0 wt. %, based on the total weight of the powder used to form the glass seal **22**. The binders help adhere the components of the glass seal **22** together when the glass seal **22** is introduced into the bore of the insulator **26**.

In the exemplary embodiment, the powder used to form the glass seal **22** includes the inorganic binder in an amount up to 2.0 wt. %, preferably 1.0 wt. %, based on the total weight of the powder used to form the glass seal **22**. The inorganic binder can include a single material or a mixture of different materials. Any type of inorganic binder material can be used in the glass seal **22**, but typically the inorganic binder includes natural or engineered clay. In the exemplary embodiment, the inorganic binder consists of, or consists essentially of, sodium bentonite or magnesium aluminum silicate, which is sold under the name Vesgum^{®},

The powder used to form the glass seal **22** of the reference example also includes the synthetic or natural organic binder in an amount up to 2.0 wt. %, or 0.1 to 2.0 wt. %, and preferably 0.65 wt. %, based on the total weight of the powder used to form the glass seal **22**. The synthetic or natural organic binder can include a single material or a mixture of different materials. Any type of synthetic or natural organic binder material can be used in the glass seal **22**. However, in the reference example, the synthetic or natural organic binder consists of, or consists essentially of, polyethylene glycol (PEG) and maltodextrin or dextrin, In this example, the PEG is present in an amount of 0.15 wt. %, and the maltodextrin or dextrin is present in an amount of 0.5 wt. %, based on the total weight of the powder used to form the glass seal **22**.

The powder used to form the electrically conductive glass seal **22** also includes the expansion agent in an amount of 0.1 to 0.5 wt. %, based on the total weight of the powder used to form the glass seal **22**. The expansion agent can include a single material or a mixture of different materials. Any type of expansion agent can be used in the glass seal **22**, but in the reference example, the expansion agent consists of, or consists essentially of lithium carbonate, At least a portion of the expansion agent converts from a solid to a gas when heated to the glass melting temperature during the firing step, thus causing the glass seal **22** to expand.

The balance of the electrically conductive glass seal **22** is typically formed of glass. The power used to from the glass seal **22** includes a plurality of glass frits, which is finely powdered glass. The glass frits are present in an amount that causes the fired glass seal to include glass in an amount of 72.0 to 82.0 wt. %, based on the total weight of the glass seal **22**. In one embodiment, the amount of glass frits used to form the glass seal **22** is selected so that the ratio between the glass frits and the electrically conductive particles is about 4 to 1,

The glass frits comprise ground glass and may contain multiple chemical elements chemically combined and fused into a single material. Any type of glass frits known in the art can be used. The glass seal may be formulated with a single glass frit, or multiple glass frits with different chemical compositions and different properties may be blended together. In the reference example, multiple glass frits are used. The overall composition of the glass frits includes silica (SiO₂) in an amount of 60.0 to 70.0 wt. %, based on the total weight of the glass frits. The glass frits also include boron oxide (B₂O₃) in an amount of 17.0 to 25.0 wt.%; and aluminum oxide (Al₂O₃) in an amount of 4.0 to 10.0 wt. %, based on the total weight of the glass frits. The glass frits further include alkali metal oxides, such as oxides of lithium (Li), sodium (Na), and potassium (K), in a total amount of 3.0 to 10.0 wt. %, based on the total weight of the glass frits. In the reference example, the glass frits include the alkali metal oxides in a total amount of 4.7 wt. %, wherein 1.5 wt. % is lithium oxide and 3.1 wt. % is sodium oxide, based on the total weight of the glass frits, The glass frits also include alkaline earth metal oxides, such as oxides of magnesium (Mg), calcium (Ca), strontium (Sr), and barium (Ba) in a total amount of 0.0 to 5.0 wt. %, based on the total weight of the glass frits. The glass frits and the powder used to form the overall glass seal **22** can also include small amounts of other components and/or impurities.

Tables 3 and 4 concern the present invention, whereas Tables 1 and 2 are for reference only.

Table 1 provides three reference example powder compositions used to form a glass seal 22, in weight percent (wt. %), based on the total weight of the powder used to form the glass seal **22**.

**Table 1**

| Component | Example A | Example B | Example C |
|---|---|---|---|
| Glass Frits | 77.85 | 81.65 | 85.45 |
| Copper Flakes | 20 | 16 | 12 |
| Sodium Bentonite | 1 | 1.2 | 1.4 |
| Lithium Carbonate | 0.5 | 0,5 | 0.5 |
| Polyethylene Glycol | 0.15 | 0.15 | 0.15 |
| Dextrin | 0.5 | 0.5 | 0.5 |

Table 2 provides reference glass frit compositions, in weight percent (wt. %), based on the total weight of the glass frit composition,

**Table 2**

| Component | Overall Range | Example Range 1 | Example 1 | Example Range 2 | Example 2 |
|---|---|---|---|---|---|
| Silicon Dioxide | 22 - 40 | 35 - 40 | 38.6 | 22 - 28 | 25.1 |
| Boron Oxide | 20 - 28 | 20 -28 | 26.9 | 21 - 27 | 24.2 |
| Alumina | 10 - 22 | 10 - 15 | 11.7 | 16 - 22 | 18.4 |
| Bismuth Oxide | 5 - 15 | 5 - 10 | 7.3 | 10 - 15 | 12.5 |
| Zinc Oxide | 3 - 10 | 3 - 5 | 4.8 | 5 - 10 | 8.1 |
| Alkali Metal Oxides | 2 - 6 | 2 - 6 | 4.7 | 2 - 5 | 2.8 |
| Alkaline Earth Metal Oxides | 3 - 12 | 3 - 7 | 5.9 | 6 - 12 | 9.0 |

In the reference compositions of Table 2, the alkali metal oxides include one or more of the group comprising lithium oxide, sodium oxide and potassium oxide. In one example, approximately one third of the alkali metal oxides is lithium oxide and approximately two thirds is sodium oxide. However, any ratio of alkali metal oxides may be used. The alkaline earth metal oxides of the reference composition include one or more of the group comprising magnesium oxide, calcium oxide, strontium oxide and barium oxide. In one example more than one half of the alkaline earth metal oxides is strontium oxide and approximately one third is magnesium oxide. However, any ratio of alkaline earth metal oxides may be used. However, those of ordinary skill in the art understand that other types of alkali metals and alkaline earth metals can be used in addition to, or in place of those listed.

According to an exemplary embodiment, the glass seal **22** is formed from a mixture of glass frits, electrically conductive particles, expansion agent, and inorganic binder, but no organic binder, The glass frits are present in an amount that causes the fired glass seal **22** to include glass in an amount of 72.0 to 82.0 wt. %, based on the total weight of the glass seal **22**. The powder used to form the glass seal **22** typically includes the glass frits in an amount of 72.0 to 90.0 wt.%, the electrically conductive particles in an amount of 10.0 to 25.0 wt. %, the inorganic binder in an amount of 1.0 to 5.0 wt. %, and the expansion agent in an amount of 0.10 to 0.50 wt. %, based on the total weight of the powder used to from the glass seal **22**. Preferably, the electrically conductive particles are copper flakes, the inorganic binder is bentonite, and the expansion agent is calcium carbonate.

Table 3 provides an example powder composition used to form the glass seal **22** according to an embodiment, in weight percent (wt. %), based on the total weight of the powder used to form the glass seal **22**.

**Table 3**

| Component | Amount |
|---|---|
| Glass Frits | 76.5 |
| Copper Flakes | 20.0 |
| Bentonite | 3.0 |
| Calcium Carbonate | 0.5 |

Table 4 provides exemplary glass frit compositions which are preferably used in the powder composition of Table 3, in weight percent (wt. %), based on the total weight of the glass frit composition. The other oxides listed in Table 4 can include any type of oxide.

**Table 4**

| Component | Overall Range | Example Amount |
|---|---|---|
| Silicon Dioxide | 60 - 70 | 64.6 |
| Boron Oxide | 17-25 | 22.2 |
| Aluminum Oxide | 4 - 10 | 5.2 |
| Alkali Metal Oxides | 3 - 10 | 7.7 |
| Alkaline Earth Metal Oxides | 0-5 | 0.3 |

In the exemplary compositions of Table 4, the alkali metal oxides include one or more of the group comprising lithium oxide, sodium oxide and potassium oxide. The alkaline earth metal oxides of the exemplary composition include one or more of the group comprising magnesium oxide, calcium oxide, strontium oxide and barium oxide. In one example embodiment, the glass frits includes sodium oxide (Na₂O) in an amount of 3.3 to 4.3 wt. %, potassium oxide (K₂O) in an amount of 3.4 to 4.4 wt. %, a combination of magnesium oxide and calcium oxide (MgO + CaO) in an amount of 0.2 to 0.4 wt. %, and other oxides in a total amount of 0.0 to 0.1 wt. %, based on the total weight of the glass frits. However, those of ordinary skill in the art understand that other amounts and other types of alkali metal oxides and alkaline earth metal oxides can be used in addition to, or in place of those listed.

The electrically conductive powder used to form the electrically conductive glass seal 22 can be prepared using various different methods, including any method known in the art. Typically, the method includes obtaining the electrically conductive particles, binder, expansion agent, and glass frits, and mixing those components together. Once the components are mixed together, the electrically conductive material can be disposed in a bore of the insulator **26**.

In one embodiment, prior to disposing the electrically conductive material in the insulator **26**, the materials are mixed together by dry mixing. Alternatively, the materials could be wet ground or mixed with water to form a slurry, and then spray dried to form a plurality of granulated particles or powder, The spray drying step includes disposing the slurry in a heated spray drier, wherein the slurry forms droplets with water that flashes off in the heated spray dryer, leaving small spherical granular particles. However, other methods can be used to provide the electrically conductive material in particulate or powder form. For example the dry powders can be dry mixed in a mixer or blender with a small amount of water subsequently added which causes the powder mixture to agglomerate into granular particles, which may be subsequently dried or partially dried. The granules or powder are relatively easy to handle, create little dust, and can be easily tamped or otherwise disposed in the bore of the insulator **26** around the central electrode **24**, and around other electrically conductive components, if desired.

Once the electrically conductive material, typically the powder, is disposed in the bore of the insulator **26**, the insulator **26**, central electrode **24** and electrically conductive material are fired together in a furnace, according to any method known in the art. During the firing step, the components of the electrically conductive powder melt and expand to fill at least a portion of the bore of the insulator **26** around the central electrode **24**, and thus form the electrically conductive glass seal **22** providing the hermetic bond between the central electrode **24** and the insulator **26**. The firing temperature varies depending on the composition of the electrically conductive material, and in particular the composition of the glass frits, but typically ranges from 600 to 1000° C. For example, when the glass frits comprise the first reference composition of Table 2, the firing temperature ranges from 750 to 800° C. and when the glass frits comprise the second example composition of Table 2, the firing temperature ranges from 650 to 700° C. In each case, the firing temperature is higher than the maximum temperature of the glass seal **22** during operation of the corona igniter **20**.

Furthermore, at least a portion of the expansion agent converts from a solid to a gas and generates bubbles in the material during the firing step, which causes the material to expand. The increase in volume of the material and the volume of the bore occupied by the electrically conductive glass seal **22** can vary. The gas-filled bubbles lead to gas-filled pores remaining in the electrically conductive glass seal **22** after the firing step and when the glass seal **22** cools to room temperature. The gas-filled pores also remain in the glass seal **22** when the corona igniter **20** is used in the internal combustion engine. The fired glass seal **22** includes a plurality of gas-filled pores in an amount of 25.0 to 75.0 vol. %, and preferably 35.0 to 45.0 vol. %, based on the total volume of the glass seal. The electrically conductive particles prevent the potential for failure that could be caused by the gas-filled pores. Other than the change in mass of the expansion agent and the burnt off binder, the composition does not substantially change during the firing step, and the fired glass seal 22 has substantially the same composition as the starting powder,

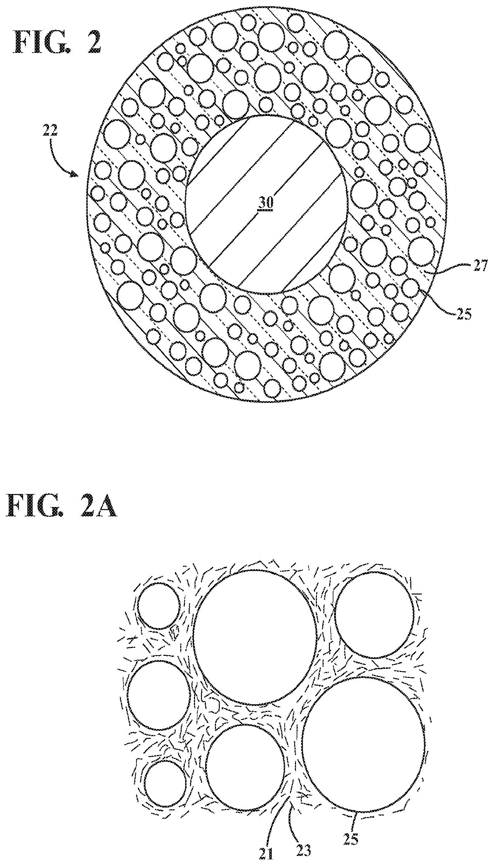

Figures 2 and 2A illustrate the electrically conductive glass seal **22** of Figure 1, which includes the glass **21**, electrically conductive metal particles **23**, and gas-filled pores **15** after the firing step. The pores **25** have an approximately spherical shape and are spaced from one another by a matrix **27** comprising the metal particles **23** distributed in the glass **21**. The metal particles **23** are distributed with sufficient electrical contact between them such that the glass seal **22** is electrically conductive. Although the pores **25** are close to one another, they are isolated from one another so that there is no transport of gas between them, and thus no transport of gas through the glass seal **22**.

As shown in Figure 1, the electrically conductive glass seal **22** typically surrounds a terminal end **28** of the central electrode **24** and also surrounds a portion of a terminal **30**. However, although not shown, the glass seal **22** could also surround other electrically conductive components disposed in the bore of the insulator **26**, such as a resistor or a spring,

The corona igniter **20** including the electrically conductive glass seal **22** of the present invention can have various different designs, including, but not limited to the design shown in Figure 1. In the exemplary embodiment of Figure 1, the central electrode **24** is disposed in the bore of the insulator **26** beneath the terminal **30**, and the terminal **30** engages the terminal end **28** of the central electrode **24**. The central electrode **24** is formed of an electrically conductive material, such as nickel or a nickel alloy. The central electrode **24** has a length **L** extending along a center axis A from a terminal end **28** to a firing end **32**, wherein a majority of the length **L** of the central electrode **24** is surrounded by the insulator **26.** The terminal end **28** of the central electrode **24** is supported and maintained in a predetermined axial position by a reduced diameter of the insulator **26**. Also in the exemplary embodiment, the central electrode **24** includes a firing tip **34** at the firing end **32**. The firing tip **34** has a plurality of branches each extending radially outwardly from the center axis A for emitting an electric field and providing the corona discharge during use of the corona igniter **20** in the internal combustion engine.

The insulator **26** of Figure 1 extends longitudinally along the center axis **A** from an insulator upper end **38** to an insulator nose end **40**. The insulator **26** is formed of an insulating material, typically a ceramic such as such as alumina. The insulator **26** also presents an insulator inner surface **42** surrounding the bore which extends longitudinally from the insulator upper end **38** to the insulator nose end **40** for receiving the central electrode **24**, terminal **30**, and possibly other electrically conductive components. The firing tip **34** of the central electrode **24** is disposed longitudinally past the insulator nose end **40**. The insulator inner surface **42** presents an insulator inner diameter **Di** extending across and perpendicular to the center axis **A.** The insulator inner diameter **Di** typically decreases along a portion of the insulator **26** moving toward the insulator nose end **40** for supporting a portion of the central electrode **24** and maintaining the central electrode **24** in the predetermined axial position.

The insulator **26** of the exemplary embodiment also presents an insulator outer surface **44** having an insulator outer diameter **Do** extending across and perpendicular to the center axis **A.** The insulator outer surface **44** extends longitudinally from the insulator upper end **38** to the insulator nose end **40.** In the exemplary embodiment, the insulator outer diameter **Do** decreases along a portion of the insulator **26** adjacent the insulator nose end **40**, moving toward the insulator nose end **40**, to present an insulator nose region **46.** The insulator outer diameter Do also decreases in a direction moving toward the insulator nose end **40** in a location spaced from the insulator nose region **46**, approximately at the middle of the insulator **26,** to present an insulator lower shoulder **48.** The insulator outer diameter **Do** also decreases along a portion of the insulator **26** moving toward the insulator upper end **38** at a location spaced from the insulator lower shoulder **48** to present an insulator upper shoulder **50.**

The corona igniter **20** also typically includes a shell **52** formed of metal and surrounding a portion of the insulator **26.** The shell **52** is typically used to couple the insulator **26** to a cylinder block (not shown) of the internal combustion engine. The shell **52** extends along the center axis **A** from a shell upper end **54** to a shell lower end **56**. The shell upper end **54** is disposed between the insulator upper shoulder **50** and the insulator upper end **38** and engages the insulator **26**. The shell lower end **56** is disposed adjacent the insulator nose region **46** such that at least a portion of the insulator nose region **46** extends axially outwardly of the shell lower end **56**.

Obviously, many modifications and variations of the present invention are possible in light of the above teachings and may be practiced otherwise than as specifically described while within the scope of the following claims.

## Claims

1. An electrically conductive glass seal (22) for a corona igniter (20), comprising:
at least one glass in a total amount of 72.0 to 82.0 weight (wt. %), based on the total weight of said glass seal;
electrically conductive metal particles in an amount of 10.0 to 25.0 wt. %, based on the total weight of said glass seal (22);
wherein said glass seal (22) includes gas-filled pores in an amount of 25.0 to 75.0 volume percent (vol. %), based on the total volume of said glass seal (22); and
said glass seal is electrical conductive
wherein said glass includes silica (SiO₂) in an amount of 60.0 to 70.0 wt. %, boron oxide (B₂O₃) in an amount of 17.0 to 25.0 wt. %, aluminum oxide (Al₂O₃) in an amount of 4.0 to 10.0 wt. %, alkali metal oxides in an amount of 3.0 to 10.0 wt. %, and alkaline earth metal oxides in an amount of 0.0 to 5.0 wt. %, based on the total weight of said glass.

2. The electrically conductive glass seal (22) of claim 1, wherein said electrically conductive metal particles include flakes of copper.

3. The electrically conductive glass seal (22) of Claim 1, wherein the alkali metal oxides include one or more of the group comprising lithium oxide, sodium oxide and potassium oxide.

4. The electrically conductive glass seal (22) of Claim 1 or Claim 3, wherein the alkaline earth metal oxides include one or more of the group comprising magnesium oxide, calcium oxide, strontium oxide and barium oxide.

5. The electrically conductive glass seal (22) of an of the previous claims, wherien the glass frits includes sodium oxide (Na₂O) in an amount of 3.3 to 4.3 wt. %, potassium oxide (K₂O) in an amount of 3.4 to 4.4 wt. %, a combination of magnesium oxide and calcium oxide (MgO + CaO) in an amount of 0.2 to 0.4 wt. %, and other oxides in a total amount of 0.0 to 0.1 wt. %, based on the total weight of the glass frits.

6. A corona igniter (20), comprising:
an electrically conductive component (24);
an insulator (26) surrounding said electrically conductive component (24);
an electrically conductive glass seal (22) providing a hermetic bond between said electrically conductive component (22) and said insulator (26);
said electrically conductive glass seal (22) including at least one glass in a total amount of 72.0 to 82.0 wt. %, and electrically conductive metal particles in an amount of 10.0 to 25.0 wt. %, based on the total weight of the glass seal, wherein said glass includes silica (SiO₂) in an amount of 60.0 to 70.0 wt. %, boron oxide (B₂O₃) in an amount of 17.0 to 25.0 wt. %, aluminum oxide (Al₂O₃) in an amount of 4.0 to 10.0 wt. %, alkali metal oxides in an amount of 3.0 to 10.0 wt. %, and alkaline earth metal oxides in an amount of 0.0 to 5.0 wt. %, based on the total weight of said glass;
wherein the glass seal (22) includes gas-filled pores in an amount of 25.0 to 75.0 vol. %, based on the total volume of the glass seal; and
the glass seal (22) is electrical conductive.

7. A method of manufacturing a glass seal (22) for a corona igniter (20) according to Claim 1, comprising the steps of:
providing a mixture including at least one glass frit in a total amount of 72.0 to 90.0 wt. %, an inorganic binder in an amount of 1.0 to 5.0 wt. %, an expansion agent in an amount of 0.1 to 0.5 wt. %, and electrically conductive metal particles in an amount of 10.0 to 25.0 wt. %, based on the total weight of the mixture, wherein said glass frit includes silica (SiO₂) in an amount of 60.0 to 70.0 wt. %, boron oxide (B₂O₃) in an amount of 17.0 to 25.0 wt. %, aluminum oxide (Al₂O₃) in an amount of 4.0 to 10.0 wt. %, alkali metal oxides in an amount of 3.0 to 10.0 wt. %, and alkaline earth metal oxides in an amount of 0.0 to 5.0 wt. %, based on the total weight of the glass frit composition; and
firing the mixture to form the glass seal (22), wherein the glass seal (22) is electrically conductive.

8. The method of claim 7, wherein the inorganic binder includes bentonite, the expansion agent includes calcium carbonate, and the electrically conductive metal particles include flakes of copper.

9. A method of manufacturing a corona igniter (20) according to Claim 6, comprising the steps of:
disposing a mixture between an electrically conductive component (24) and an insulator (26), wherein the mixture comprises at least one glass frit in a total amount of 72.0 to 90.0 wt. %, an inorganic binder in an amount of 1.0 to 5.0 wt. %, an expansion agent in an amount of 0.1 to 0.5 wt. %, and electrically conductive metal particles in an amount of 10.0 to 25.0 wt. %, based on the total weight of the mixture, wherein said glass frit includes silica (SiO₂) in an amount of 60.0 to 70.0 wt. %, boron oxide (B₂O₃) in an amount of 17.0 to 25.0 wt. %, aluminum oxide (Al₂O₃) in an amount of 4.0 to 10.0 wt. %, alkali metal oxides in an amount of 3.0 to 10.0 wt. %, and alkaline earth metal oxides in an amount of 0.0 to 5.0 wt. %, based on the total weight of the glass frit composition; and
firing the mixture to form the glass seal (22), wherein the glass seal (22) is electrically conductive.

10. The method of claim 9, including disposing the insulator (26) around the electrically conductive component (24); wherein the electrically conductive component includes a central electrode (24) surrounded by the insulator (26) and a firing tip (34) located at an end of the central electrode, the firing tip (34) including a plurality of branches each extending radially outwardly from a center axis (A).

## Patentansprüche

1. Elektrisch leitfähige Glasdichtung (22) für einen Korona-Zünder (20), umfassend:
mindestens ein Glas in einer Gesamtmenge von 72,0 bis 82,0 Gewichtsprozent (Gew.-%), bezogen auf das Gesamtgewicht der Glasdichtung;
elektrisch leitfähige Metallpartikel in einer Menge von 10,0 bis 25,0 Gew.-%, bezogen auf das Gesamtgewicht der Glasdichtung (22);
wobei die Glasdichtung (22) gasgefüllte Poren in einer Menge von 25,0 bis 75,0 Volumenprozent (Vol.-%), bezogen auf das Gesamtvolumen der Glasdichtung (22), einschließt; und
die Glasdichtung elektrisch leitfähig ist, wobei das Glas Siliciumdioxid (SiO₂) in einer Menge von 60,0 bis 70,0 Gew.-%, Boroxid (B₂O₃) in einer Menge von 17,0 bis 25,0 Gew.-%, Aluminiumoxid (Al₂O₃) in einer Menge von 4,0 bis 10,0 Gew.-%, Alkalimetalloxide in einer Menge von 3,0 bis 10,0 Gew.-% und Erdalkalimetalloxide in einer Menge von 0,0 bis 5,0 Gew.-%, bezogen auf das Gesamtgewicht des Glases, einschließt.

2. Elektrisch leitfähige Glasdichtung (22) nach Anspruch 1, wobei die elektrisch leitfähigen Metallpartikel Kupferflocken einschließen.

3. Elektrisch leitfähige Glasdichtung (22) nach Anspruch 1, wobei die Alkalimetalloxide eines oder mehrere von der Gruppe, umfassend Lithiumoxid, Natriumoxid und Kaliumoxid, einschließen.

4. Elektrisch leitfähige Glasdichtung (22) nach Anspruch 1 oder Anspruch 3, wobei die Erdalkalimetalloxide eines oder mehrere von der Gruppe, umfassend Magnesiumoxid, Calciumoxid, Strontiumoxid und Bariumoxid, einschließen.

5. Elektrisch leitfähige Glasdichtung (22) nach einem der vorstehenden Ansprüche, wobei die Glasfritten Natriumoxid (Na₂O) in einer Menge von 3,3 bis 4,3 Gew.-%, Kaliumoxid (K₂O) in einer Menge von 3,4 bis 4,4 Gew.-%, eine Kombination von Magnesiumoxid und Calciumoxid (MgO + CaO) in einer Menge von 0,2 bis 0,4 Gew.-% und andere Oxide in einer Gesamtmenge von 0,0 bis 0,1 Gew.-%, bezogen auf das Gesamtgewicht der Glasfritten, einschließen.

6. Korona-Zünder (20), umfassend:
eine elektrisch leitfähige Komponente (24);
einen Isolator (26), der die elektrisch leitfähige Komponente (24) umgibt;
eine elektrisch leitfähige Glasdichtung (22), die eine hermetische Verbindung zwischen der elektrisch leitfähigen Komponente (22) und dem Isolator (26) bereitstellt;
die elektrisch leitfähige Glasdichtung (22), einschließend mindestens ein Glas in einer Gesamtmenge von 72,0 bis 82,0 Gew.-% und elektrisch leitfähige Metallpartikel in einer Menge von 10,0 bis 25,0 Gew.-%, bezogen auf das Gesamtgewicht der Glasdichtung, wobei das Glas Siliciumdioxid (SiO₂) in einer Menge von 60,0 bis 70,0 Gew.-%, Boroxid (B₂O₃) in einer Menge von 17,0 bis 25,0 Gew.-%, Aluminiumoxid (Al₂O₃) in einer Menge von 4,0 bis 10,0 Gew.-%, Alkalimetalloxide in einer Menge von 3,0 bis 10,0 Gew.-% und Erdalkalimetalloxide in einer Menge von 0,0 bis 5,0 Gew.-%, bezogen auf das Gesamtgewicht des Glases, einschließt;
wobei die Glasdichtung (22) gasgefüllte Poren in einer Menge von 25,0 bis 75,0 Vol.-%, bezogen auf das Gesamtvolumen der Glasdichtung, einschließt; und die Glasdichtung (22) elektrisch leitfähig ist.

7. Verfahren zum Herstellen einer Glasdichtung (22) für einen Korona-Zünder (20) nach Anspruch 1, umfassend die Schritte von:
Bereitstellen einer Mischung, die mindestens eine Glasfritte in einer Gesamtmenge von 72,0 bis 90,0 Gew.-%, ein anorganisches Bindemittel in einer Menge von 1,0 bis 5,0 Gew.-%, ein Expansionsmittel in einer Menge von 0,1 bis 0,5 Gew.-% und elektrisch leitfähige Metallpartikel in einer Menge von 10,0 bis 25,0 Gew.-%, bezogen auf das Gesamtgewicht der Mischung, einschließt, wobei die Glasfritte Siliciumdioxid (SiO₂) in einer Menge von 60,0 bis 70,0 Gew.-%, Boroxid (B₂O₃) in einer Menge von 17,0 bis 25,0 Gew.-%, Aluminiumoxid (Al₂O₃) in einer Menge von 4,0 bis 10,0 Gew.-%, Alkalimetalloxide in einer Menge von 3,0 bis 10,0 Gew.-% und Erdalkalimetalloxide in einer Menge von 0,0 bis 5,0 Gew.-%, bezogen auf das Gesamtgewicht der Glasfrittenzusammensetzung, einschließt; und
Brennen der Mischung, um die Glasdichtung (22) zu bilden, wobei die Glasdichtung (22) elektrisch leitfähig ist.

8. Verfahren nach Anspruch 7, wobei das anorganische Bindemittel Bentonit einschließt, das Expansionsmittel Calciumcarbonat einschließt und die elektrisch leitfähigen Metallpartikel Kupferflocken einschließen.

9. Verfahren zum Herstellen eines Korona-Zünders (20) nach Anspruch 6, umfassend die Schritte von:
Anordnen einer Mischung zwischen einer elektrisch leitfähigen Komponente (24) und einem Isolator (26), wobei die Mischung mindestens eine Glasfritte in einer Gesamtmenge von 72,0 bis 90,0 Gew.-%, ein anorganisches Bindemittel in einer Menge von 1,0 bis 5,0 Gew.-%, ein Expansionsmittel in einer Menge von 0,1 bis 0,5 Gew.-% und elektrisch leitfähige Metallpartikel in einer Menge von 10,0 bis 25,0 Gew.-%, bezogen auf das Gesamtgewicht der Mischung, umfasst, wobei die Glasfritte Siliciumdioxid (SiO₂) in einer Menge von 60,0 bis 70,0 Gew.-%, Boroxid (B₂O₃) in einer Menge von 17,0 bis 25,0 Gew.-%, Aluminiumoxid (Al₂O₃) in einer Menge von 4,0 bis 10,0 Gew.-%, Alkalimetalloxide in einer Menge von 3,0 bis 10,0 Gew.-% und Erdalkalimetalloxide in einer Menge von 0,0 bis 5,0 Gew.-%, bezogen auf das Gesamtgewicht der Glasfrittenzusammensetzung, einschließt; und
Brennen der Mischung, um die Glasdichtung (22) zu bilden, wobei die Glasdichtung (22) elektrisch leitfähig ist.

10. Verfahren nach Anspruch 9, einschließend ein Anordnen des Isolators (26) um die elektrisch leitfähige Komponente (24) herum; wobei die elektrisch leitfähige Komponente eine zentrale Elektrode (24), die von dem Isolator (26) umgeben ist, und eine Brennspitze (34), die sich an einem Ende der zentralen Elektrode befindet, einschließt, wobei die Brennspitze (34) eine Vielzahl von Verzweigungen einschließt, die sich jeweils von einer Mittelachse radial nach außen erstrecken (A).

## Revendications

1. Joint d'étanchéité en verre électroconducteur (22) pour un allumeur à effet corona (20), comprenant :
au moins un verre en une quantité totale allant de 72,0 à 82,0% en poids, par rapport au poids total dudit joint d'étanchéité en verre ;
des particules métalliques électroconductrices en une quantité allant de 10,0 à 25,0% en poids, par rapport au poids total dudit joint d'étanchéité en verre (22) ;
dans lequel ledit joint d'étanchéité en verre (22) comprend des pores remplis de gaz en une quantité allant de 25,0 à 75,0 pour cent en volume (% en volume), par rapport au volume total dudit joint d'étanchéité en verre (22) ; et
ledit joint d'étanchéité en verre est électroconducteur,
dans lequel ledit verre comprend de la silice (SiO₂) en une quantité allant de 60,0 à 70,0% en poids, de l'oxyde de bore (B₂O₃) en une quantité allant de 17,0 à 25,0% en poids, de l'oxyde d'aluminium (Al₂O₃) en une quantité allant de 4,0 à 10,0% en poids, des oxydes de métaux alcalins en une quantité allant de 3,0 à 10,0% en poids, et des oxydes de métaux alcalino-terreux en une quantité allant de 0,0 à 5,0% en poids, par rapport au poids total dudit verre.

2. Joint d'étanchéité en verre électroconducteur (22) de la revendication 1, dans lequel lesdites particules métalliques électroconductrices comprennent des paillettes de cuivre.

3. Joint d'étanchéité en verre électroconducteur (22) de la revendication 1, dans lequel les oxydes de métaux alcalins comprennent un ou plusieurs du groupe comprenant l'oxyde de lithium, l'oxyde de sodium et l'oxyde de potassium.

4. Joint d'étanchéité en verre électroconducteur (22) de la revendication 1 ou la revendication 3, dans lequel les oxydes de métaux alcalino-terreux comprennent un ou plusieurs du groupe comprenant l'oxyde de magnésium, l'oxyde de calcium, l'oxyde de strontium et l'oxyde de baryum.

5. Joint d'étanchéité en verre électroconducteur (22) de l'une des revendications précédentes, dans lequel les frittes de verre comprennent de l'oxyde de sodium (Na₂O) en une quantité allant de 3,3 à 4,3% en poids, de l'oxyde de potassium (K₂O) en une quantité allant de 3,4 à 4,4% en poids, une combinaison d'oxyde de magnésium et d'oxyde de calcium (MgO + CaO) en une quantité allant de 0,2 à 0,4% en poids, et d'autres oxydes en une quantité totale allant de 0,0 à 0,1% en poids, par rapport au poids total des frittes de verre.

6. Allumeur à effet corona (20), comprenant :
un composant électroconducteur (24) ;
un isolant (26) entourant ledit composant électroconducteur (24) ;
un joint d'étanchéité en verre électroconducteur (22) assurant une liaison hermétique entre ledit composant électroconducteur (22) et ledit isolant (26) ;
ledit joint d'étanchéité en verre électroconducteur (22) comprenant au moins un verre en une quantité totale allant de 72,0 à 82,0% en poids, et des particules métalliques électroconductrices en une quantité allant de 10,0 à 25,0% en poids, par rapport au poids total du joint d'étanchéité en verre, dans lequel ledit verre comprend de la silice (SiO₂) en une quantité allant de 60,0 à 70,0% en poids, de l'oxyde de bore (B₂O₃) en une quantité allant de 17,0 à 25,0% en poids, de l'oxyde d'aluminium (Al₂O₃) en une quantité allant de 4,0 à 10,0% en poids, des oxydes de métaux alcalins en une quantité allant de 3,0 à 10,0% en poids, et des oxydes de métaux alcalino-terreux en une quantité allant de 0,0 à 5,0% en poids, par rapport au poids total dudit verre ;
dans lequel le joint d'étanchéité en verre (22) comprend des pores remplis de gaz en une quantité allant de 25,0 à 75,0% en volume, par rapport au volume total du joint d'étanchéité en verre ; et
le joint d'étanchéité en verre (22) est électroconducteur.

7. Procédé de fabrication d'un joint d'étanchéité en verre (22) pour un allumeur à effet corona (20) selon la revendication 1, comprenant les étapes de :
fourniture d'un mélange comprenant au moins une fritte de verre en une quantité totale allant de 72,0 à 90,0% en poids, un liant inorganique en une quantité allant de 1,0 à 5,0% en poids, un agent d'expansion en une quantité allant de 0,1 à 0,5% en poids, et des particules métalliques électroconductrices en une quantité allant de 10,0 à 25,0% en poids, par rapport au poids total du mélange, dans lequel ladite fritte de verre comprend de la silice (SiO₂) en une quantité allant de 60,0 à 70,0% en poids, de l'oxyde de bore (B₂O₃) en une quantité allant de 17,0 à 25,0% en poids, de l'oxyde d'aluminium (Al₂O₃) en une quantité allant de 4,0 à 10,0% en poids, des oxydes de métaux alcalins en une quantité allant de 3,0 à 10,0% en poids, et des oxydes de métaux alcalino-terreux en une quantité allant de 0,0 à 5,0% en poids, par rapport au poids total de la composition de fritte de verre ; et
cuisson du mélange pour former le joint d'étanchéité en verre (22), dans lequel le joint d'étanchéité en verre (22) est électroconducteur.

8. Procédé de la revendication 7, dans lequel le liant inorganique comprend de la bentonite, l'agent d'expansion comprend du carbonate de calcium et les particules métalliques électroconductrices comprennent des paillettes de cuivre.

9. Procédé de fabrication d'un allumeur à effet corona (20) selon la revendication 6, comprenant les étapes de :
disposition d'un mélange entre un composant électroconducteur (24) et un isolant (26), dans lequel le mélange comprend au moins une fritte de verre en une quantité totale allant de 72,0 à 90,0% en poids, un liant inorganique en une quantité allant de 1,0 à 5,0% en poids, un agent d'expansion en une quantité allant de 0,1 à 0,5% en poids, et des particules métalliques électroconductrices en une quantité allant de 10,0 à 25,0% en poids, par rapport au poids total du mélange, dans lequel ladite fritte de verre comprend de la silice (SiO₂) en une quantité allant de 60,0 à 70,0% en poids, de l'oxyde de bore (B₂O₃) en une quantité allant de 17,0 à 25,0% en poids, de l'oxyde d'aluminium (Al₂O₃) en une quantité allant de 4,0 à 10,0% en poids, des oxydes de métaux alcalins en une quantité allant de 3,0 à 10,0% en poids, et des oxydes de métaux alcalino-terreux en une quantité allant de 0,0 à 5,0% en poids, par rapport au poids total de la composition de fritte de verre ; et
cuisson du mélange pour former le joint d'étanchéité en verre (22), dans lequel le joint d'étanchéité en verre (22) est électroconducteur.

10. Procédé de la revendication 9, comprenant la disposition de l'isolant (26) autour du composant électroconducteur (24) ; dans lequel le composant électroconducteur comprend une électrode centrale (24) entourée par l'isolant (26) et une pointe d'allumage (34) située au niveau d'une extrémité de l'électrode centrale, la pointe d'allumage (34) comprenant une pluralité de branches s'étendant chacune radialement vers l'extérieur à partir d'un axe central (A).
